# DEMANDE DE BREVET EUROPEEN

(11) **EP 0 849 194 A1**
(43) Date de publication de la demande: **24.06.1998**
(21) Numéro de dépôt: 97403074.4
(22) Date de dépôt: 18.12.1997
(51) Int. Cl.: B65G 17/20, B61B 10/02, F16G 9/00

(54) **Convoyeur de manutention de charges isolées**

(30) Priorité: 19.12.1996 FR 9615632
(71) Demandeur: CFC Systèmes Automatisés SA, 92130 Issy les Moulineaux (FR)
(72) Inventeur: Doutreleau, Dominique, 77410 Claye-Souilly (FR)
(74) Mandataire: Lhuillier, René

(57) **Abrégé**

L'élément de liaison des trolleys (2, 5) du convoyeur est constitué de drisses souples (8, 9) maintenues écartées l'une de l'autre par une pièce intermédiaire (10) formant entretoise, portée par les trolleys et par des capots de serrage (12) disposés entre les trolleys. Les trolleys et capots de serrage définissent entre eux un pas délimitant les maillons d'une chaîne continue. Le pas est identique à celui des chaînes standard et permet son adaptation aux groupes de motorisation desdites chaînes standard.

Application aux convoyeurs aériens.

## Description

L'invention se rapporte aux convoyeurs aériens pour la manutention de charges isolées, en particulier les convoyeurs automatiques dans lesquels les charges sont soutenues par des chariots porteurs qui se déplacent sur une voie de roulement inférieure. Ces chariots porteurs sont eux-mêmes entraînés par des poussoirs ou des taquets portés par un élément de liaison réalisé de façon courante par une chaîne sans fin, qui est soutenue par des trolleys roulant sur un autre rail constituant une voie de roulement supérieure placée juste au-dessus de la précédente. L'invention concerne préférentiellement ces convoyeurs dits à double voie, mais elle pourrait aussi s'appliquer aux installations à simple voie dans lesquelles les trolleys portent eux-mêmes les charges.

L'invention concerne plus précisément cet élément de liaison et de traction qui était habituellement constitué d'une chaîne en acier forgé, concentrique à l'axe longitudinal du convoyeur. On peut observer qu'un des avantages de la chaîne, hormis sa résistance, réside dans le fait que ses maillons permettent son accrochage sur des roues dentées qui assurent son entraînement. Les trolleys qui soutiennent la chaîne sont donc déplacés par elle sur la voie de roulement supérieure qui peut prendre des courbes aussi bien horizontales que verticales.

Ce système très répandu utilisant une chaîne d'entraînement comme élément de liaison est cependant bruyant notamment pour certaines vitesses de défilement, en particulier dans les courbes et au niveau du groupe d'entraînement. En outre, pour limiter l'usure due à la friction des pièces métalliques, ces chaînes à maillons doivent être graissées et l'usage de ces graisses est tout à fait inapproprié pour certaines applications du fait des risques de pollution. De plus les chaînes en acier sont lourdes et introduisent donc une limite à la vitesse de déroulement du convoyeur. Enfin, si ces chaînes peuvent prendre des courbures horizontales importantes, en revanche les courbures verticales possibles, autorisées seulement par le jeu entre les maillons, sont beaucoup plus modestes.

Pour pallier à ces inconvénients, on a déjà pensé à remplacer cette chaîne par une courroie ou un câble en caoutchouc ou en plastique, renforcé par une âme métallique ou autre. Les trolleys sont alors fixés à ce câble qui constitue l'élément continu de liaison du convoyeur.

Ce câble s'adapte aux courbes horizontales et verticales des voies de roulement, et peut être utilisé pour tous types de convoyeur. Cependant, il faut prévoir un mode particulier de fixation des trolleys sur le câble, et il faut surtout revoir le groupe de motorisation, l'entraînement ne pouvant plus se faire par des roues ou des chaînes dentées, mais par exemple par des roues à friction avec des dispositifs associés de réglage de tension. De ce fait, l'entraînement des trolleys par un tel câble de liaison n'est pas interchangeable avec un convoyeur à chaîne à cause précisément des différences liées à la motorisation.

L'invention remédie à ces inconvénients en proposant comme élément de liaison, une chaîne à maillons continus réalisée à partir de plusieurs drisses souples reliées par des entretoises selon un pas identique à celui d'une chaîne classique de telle sorte que l'élément de liaison dispose de maillons et puisse bénéficier d'un mode d'entraînement traditionnel, tout en présentant l'avantage d'une chaîne souple, légère et non polluante.

L'invention a donc pour objet un convoyeur de manutention de charges isolées comportant au moins une voie de roulement sur laquelle se déplacent des trolleys reliés entre eux par un élément de liaison et de traction à maillons, pour leur entraînement par un groupe de motorisation à roues dentées, convoyeur selon lequel l'élément de liaison est constitué d'au moins deux drisses souples, une drisse supérieure et une drisse inférieure, maintenues écartées l'une de l'autre par une pièce intermédiaire formant entretoise, portée par les trolleys et par des capots de serrage, lesdits trolleys et capots de serrage définissant entre eux un pas délimitant les maillons d'une chaîne continue.

Selon une caractéristique particulière de l'invention, la pièce intermédiaire formant entretoise est creusée de gorges arrondies ou striées dans lesquelles viennent se loger les drisses, de même que les trolleys et les capots de serrage, et selon certaines dispositions préférentielles, la pièce intermédiaire constituant l'entretoise forme une seule et même pièce avec un poussoir d'entraînement d'un chariot porteur.

Le capot de serrage est constitué de deux couvercles enserrant la pièce intermédiaire formant entretoise, et n'est pas relié à la voie de roulement.

On observe que le pas de la chaîne à maillons continus ainsi formée par les drisses souples, est identique à celui des chaînes standard et permet son adaptation aux groupes de motorisation desdites chaînes standard.

D'autres caractéristiques particulières et avantages de l'invention ressortiront de la description suivante d'un exemple de réalisation dans lequel il est fait référence aux dessins annexés qui représentent.

Figure 1, une vue en élévation d'une voie de roulement supérieure d'un convoyeur double voie, équipée de trolleys et de leur élément de liaison.

Figure 2, une vue en coupe selon II-II de la figure 1.

Figure 3, une vue en coupe selon III-III de la figure 1.

Figure 4, une vue en coupe d'une variante de réalisation de la représentation de la figure 2.

Figure 5, une vue en coupe d'une variante de réalisation de la représentation de la figure 3.

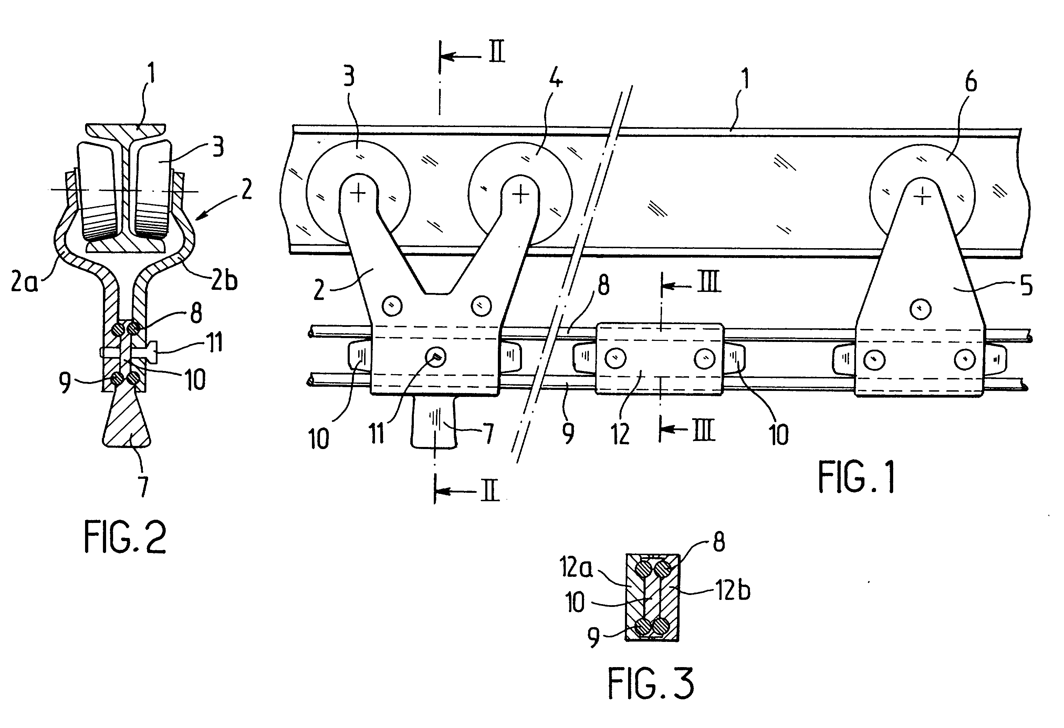

Dans l'exemple représenté aux figures 1 et 2, on voit que le chemin de roulement supérieur est formé d'un rail 1 en forme de I qui supporte des trolleys 2 à deux paires de galets porteurs (3, 4) ou des trolleys 5 à une seule paire de galets porteurs 6. Les galets roulent sur les ailes du profil en I du rail 1. La partie inférieure des trolleys 2 est équipée d'un poussoir 7 assurant l'entraînement d'un chariot porteur non représenté, circulant sur une voie de roulement inférieure également non représentée, du convoyeur. Les trolleys 5, non équipés de poussoir, n'ont pas besoin de disposer de deux paires de galets, n'étant pas soumis aux mêmes contraintes que les trolleys 2.

On voit à la figure 2 que le trolley 2 est constitué de deux brides (2a, 2b) dont les parties inférieures enserrent par pression deux drisses supérieures 8 et deux drisses inférieures 9. Ces drisses souples (8, 9) constituent l'élément de liaison du convoyeur. Elles peuvent être armées pour en renforcer la résistance. Une pièce intermédiaire 10, formant entretoise entre les brides, est profilée pour recevoir les drisses, c'est-à-dire qu'elles sont creusées de gorges arrondies ou striées dans lesquelles viennent se loger les drisses, de même que les brides sont profilées de façon identique. Les drisses sont maintenues pincées entre ladite entretoise 10 et les brides par un organe de serrage 11 du genre vis écrou, comme on peut le voir à la figure 2. Dans le cas de ce trolley 2, l'entretoise 10 forme une seule et même pièce avec le poussoir 7.

On a représenté à la figure 1 une voie de roulement supérieure 1 portant un trolley 2 à deux paires de galets porteurs (3, 4), un trolley 5 à une seule paire de galets porteurs 6, mais aussi un capot de serrage 12, prenant directement sur les drisses (8, 9) et non relié à la voie de roulement.

Le capot de serrage 12 également visible à la figure 3, est constitué de deux couvercles (12a, 12b) enserrant également à l'aide d'un organe de serrage une pièce intermédiaire 10 qui fait entretoise et qui est profilée, ainsi que les couvercles, pour recevoir les drisses (8, 9).

Le pas défini entre les capots de serrage 12 et les trolleys (2, 5) forme des maillons qui permettent d'utiliser ladite chaîne avec une roue d'entraînement classique, comme pour une chaîne matricée standard. Les capots de serrage ont une dimension proche du maillon des chaînes forgées. Ils peuvent aussi, par des prolongements vers le bas ou des formes particulières, servir de poussoir.

L'ensemble de cet élément de liaison permet de conserver les rayons des courbes verticales et horizontales existantes. La souplesse d'implantation du convoyeur est donc respectée dans le cas d'une implantation nouvelle et dans le cas d'une modification d'une installation existante, l'interchangeabilité est totale avec la chaîne.

On observera que l'absence d'articulation de l'élément de liaison permet un fonctionnement sans lubrification et donc non polluant.

Les drisses (8, 9) qui constituent l'élément de liaison ont la longueur du circuit et disposent avantageusement d'un seul point de liaison localisé au niveau d'une pièce intermédiaire 10 formant entretoise, c'est-à-dire sous un trolley ou un capot de serrage. Les drisses peuvent aussi être jonctionnées en plusieurs points à la longueur d'un pas ou préférentiellement de plusieurs pas.

On a décrit ci-dessus un exemple de réalisation utilisé pour l'équipement d'un convoyeur à double voie, mais ce même élément de liaison pourrait être utilisé aussi dans un convoyeur à simple voie, ou un convoyeur au sol.

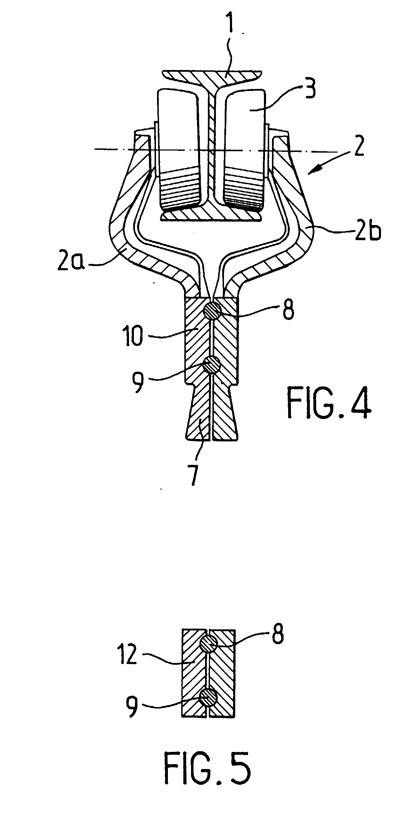

Dans une variante de réalisation représentée aux figures 4 et 5 l'élément de liaison et de traction est constitué de seulement deux drisses, une drisse supérieure 8 et une drisse inférieure 9, au lieu des quatre précédemment décrites.

Les mêmes éléments que ceux des figures 2 et 3 portent les mêmes références. On observe cependant que l'entretoise 10 fait corps avec les brides (2a, 2b) du trolley 2 (figure 4) ou est constitué du capot de serrage 12 lui même (figure 5).

## Revendications

1. Convoyeur de manutention de charges isolées comportant au moins une voie de roulement sur laquelle se déplacent des trolleys reliés entre eux par un élément de liaison et de traction constitué de drisses souples, pour leur entraînement par un groupe de motorisation à roues ou chaînes dentées, caractérisé en ce que il y a au moins deux drisses souples superposées pour l'entraînement des trolleys, une drisse supérieure (8) et une drisse inférieure (9), maintenues écartées l'une de l'autre par une pièce intermédiaire (10) formant entretoise, creusée de gorges arrondies ou striées dans lesquelles viennent se loger les drisses (8, 9), ladite pièce intermédiaire étant portée par les trolleys (2, 5) et/ou par des capots de serrage (12), également creusés de gorges adaptées aux drisses, lesdits trolleys et capots de serrage définissant entre eux un pas délimitant les maillons d'une chaîne continue.

2. Convoyeur de manutention selon la revendication 1, caractérisé en ce que la pièce intermédiaire (10) constituant l'entretoise forme une seule et même pièce avec un poussoir d'entraînement (7) d'un chariot porteur.

3. Convoyeur de manutention selon la revendication 1, caractérisé en ce que le capot de serrage (12) est constitué de deux couvercles (12a, 12b) enserrant la pièce intermédiaire (10) formant entretoise, et n'est pas relié à la voie de roulement.

4. Convoyeur de manutention selon la revendication 1, caractérisé en ce que le pas de la chaîne à maillons continus formée par les drisses souples (8, 9) est identique à celui des chaînes standard et permet son adaptation aux groupes de motorisation desdites chaînes standard.

5. Convoyeur de manutention selon la revendication 1, caractérisé en ce que les drisses (8, 9) ont la longueur totale du circuit et un seul point de liaison localisé au niveau d'une pièce intermédiaire (10) formant entretoise.

6. Convoyeur de manutention selon la revendication 1, caractérisé en ce que les drisses (8, 9) sont jonctionnées en plusieurs points de la longueur d'un pas et/ou de plusieurs pas des maillons de la chaîne.
